Europäisches Patentamt

European Patent Office

Office européen des brevets

(11) Numéro de publication: **0 351 637**
**A1**

## (12) DEMANDE DE BREVET EUROPEEN

(21) Numéro de dépôt: 89112210.3

(22) Date de dépôt: 04.07.89

(51) Int. Cl.4: **G06F 15/40** , **G11B 27/32** ,
**G06F 3/08**

(30) Priorité: 19.07.88 FR 8809989

(43) Date de publication de la demande:
24.01.90 Bulletin 90/04

(84) Etats contractants désignés:
**ES**

(71) Demandeur: **EASTMAN KODAK COMPANY (a New Jersey corporation)**
**343 State Street**
**Rochester New York 14650(US)**

(72) Inventeur: **Nguyen, Huu Than**
**KODAK-PATHE CRT - Zone Industrielle**
**F-71102 Chalon Sur Saone Cedex(FR)**

(74) Mandataire: **Buff, Michel et al**
**Kodak-Pathé Département des Brevets et Licences CRT Centre de Recherches et de Technologie Zone Industrielle**
**F-71102 Chalon sur Saône Cédex(FR)**

(54) **Procédé d'organisation et de lecture d'un support magnétique et support en faisant application.**

(57) - Lecteurs-enregistreurs.

- Le procédé d'organisation prioritaire d'informations enregistrées sur un support comportant **n** pistes ou secteurs dont au moins une est réservée et identifiée pour constituer une piste de première lecture obligatoire, consiste :

. à choisir au moins une piste prioritaire parmi les pistes d'enregistrement des informations,

. et à enregistrer, sur la piste de première lecture, l'identification de la ou des pistes prioritaires pour constituer une piste ($P_o$) de stratégie de lecture de la carte selon un ordre de priorité déterminé.

- Application à la lecture d'informations enregistrées sur un support.

Fig. 2

## PROCEDE D'ORGANISATION ET DE LECTURE D'UN SUPPORT MAGNETIQUE ET SUPPORT EN FAISANT APPLICATION

La présente invention relève du domaine technique général des périphériques informatiques appelés lecteurs-enregistreurs connectés, habituellement, à un ordinateur et conçus pour assurer la lecture et l'écriture d'informations ou de données codées sur un support magnétique à pistes.

L'invention concerne, plus précisément, les lecteurs-enregistreurs aptes à lire des supports portables, tels que les cartes à pistes magnétiques et elle vise, particulièrement, les méthodes ou les procédés de lecture des informations enregistrées sur la carte.

Les supports portables d'enregistrement d'informations ont fait l'objet, récemment, d'importants développements techniques, en raison de la possibilité qu'ils offrent de véhiculer des informations sous forme réduite et réutilisable. La mise au point de tels supports a permis d'envisager la possibilité de constituer de véritables dossiers portables, destinés à contenir des informations, de même nature ou non, en relation avec les applications choisies. A titre d'exemple, ces supports peuvent contenir, exclusivement ou non, des informations à caractère médical ou des données relatives à la mise en oeuvre, à la maintenance et/ou au passé de machines, d'appareils ou de véhicules.

L'art antérieur propose, principalement, trois types de supports portables formant une carte.

Le premier type de support est constitué par les cartes à mémoires ou à micro-circuits comportant une mémoire interne et un circuit de contrôle de ses entrées-sorties. Ces cartes à mémoires possèdent, généralement, une capacité mémoire individuelle de l'ordre de 64 kilobits. Il apparaît, en pratique, que la capacité mémoire de ces cartes est trop faible pour permettre son utilisation dans les principales applications de dossiers portables.

Le second type constitue la carte optique qui possède, généralement, une capacité mémoire de l'ordre de 64 Mégabits. Si la capacité mémoire des cartes optiques semble suffisante pour un grand nombre d'utilisations, il apparaît que ce type de carte présente encore des difficultés de mise au point ne permettant pas leur mise en oeuvre avec une fiabilité maximale.

Le troisième type de support portable est constitué par les cartes à pistes magnétiques possédant une capacité mémoire en relation avec le nombre de pistes portées par la carte. Ce type de cartes permet donc d'obtenir une capacité mémoire choisie et déterminée en relation avec le nombre de pistes enregistrées. Cependant, la capacité mémoire nécessaire à l'enregistrement des informations pour constituer des dossiers portables impose la mise en oeuvre d'un nombre élevé de pistes, de telle sorte que le temps de lecture des pistes qui en découle devient prohibitif. A titre d'exemple, la lecture d'une carte, comportant 150 pistes et correspondant à une capacité mémoire de 1 Mégabits, ne peut être obtenue qu'au terme d'un délai supérieur à 2 minutes.

La présente invention vise donc à remédier aux inconvénients énoncés ci-dessus en proposant un procédé apte à organiser, selon un ordre de priorité déterminé, la lecture des informations enregistrées sur une carte à pistes magnétiques permettant de réduire le temps d'accès de l'ordinateur aux informations enregistrées.

L'invention vise, aussi, à offrir un procédé de lecture d'une carte, conçu pour lire automatiquement les pistes selon un ordre de priorité déterminé et donner une priorité à l'exécution des ordres de commande émis par l'ordinateur.

Pour atteindre les objectifs précités, le procédé selon l'invention, d'organisation prioritaire d'informations enregistrées sur un support, notamment une carte magnétique comportant $n$ pistes ou secteurs dont au moins une est réservée et identifiée pour constituer une piste de première lecture obligatoire, est caractérisé en ce qu'il consiste :
- à choisir au moins une piste prioritaire parmi les pistes d'enregistrement des informations,
- et à enregistrer, sur la piste de première lecture, l'identification de la ou des pistes prioritaires pour constituer une piste de stratégie de lecture de la carte selon un ordre de priorité déterminé.

L'invention a aussi pour objet une carte portable à pistes comportant au moins une piste de stratégie de lecture.

L'invention a encore pour objet un procédé de lecture d'une carte portable, par un lecteur connecté à un ordinateur, consistant :
- après l'introduction de la carte dans le lecteur, à lire automatiquement et complètement une piste de stratégie de lecture,
- à transférer dans une mémoire interne le contenu de la piste de stratégie lue,
- à procéder à la lecture complète d'une piste prioritaire selon l'ordre de priorité défini dans la piste stratégie,
- à transférer dans une mémoire interne le contenu de la piste prioritaire lue,
- et à poursuivre successivement la lecture et le transfert de chacune des pistes prioritaires selon l'ordre de priorité, tant que l'ordinateur n'émet pas un ordre de commande.

Diverses autres caractéristiques ressortent de la description faite ci-dessous en référence aux dessins annexés qui montrent, à titre d'exemples non limitatifs, des formes de réalisation de l'objet de l'invention.

La **fig.** 1 est un schéma-bloc simplifié illustrant un système informatique, connu en soi, apte à assurer la mise en oeuvre de l'invention.

Les **fig.** 2 et 3 sont des organigrammes explicitant le procédé selon l'invention.

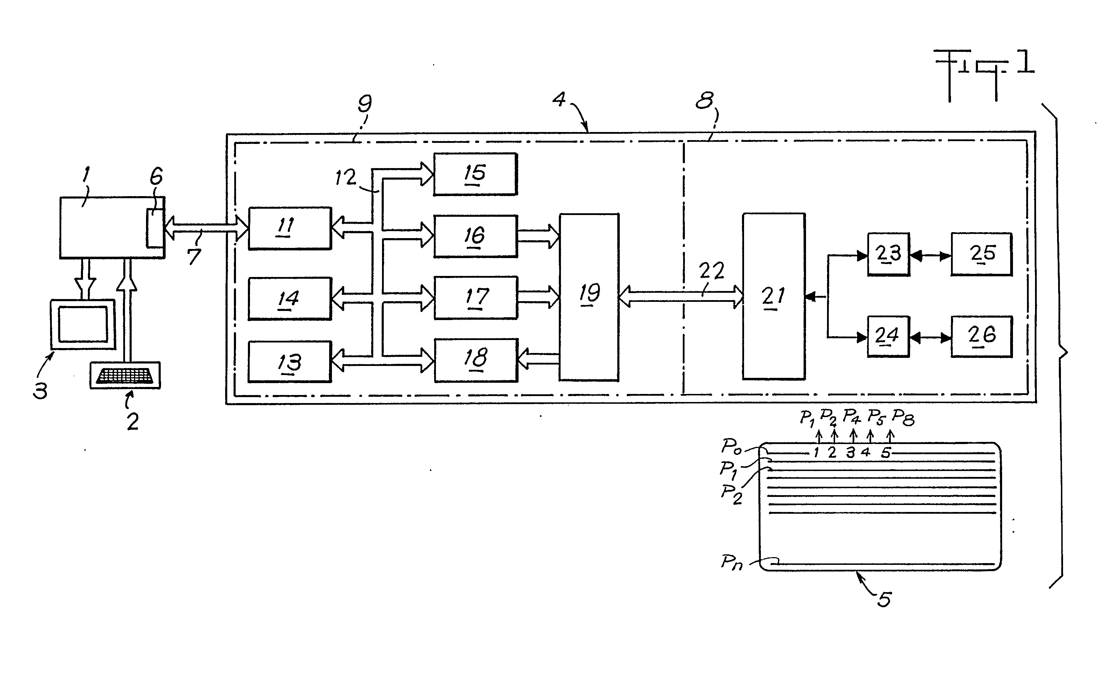

La **fig.** 1 illustre un système informatique simplifié, connu en soi, et décrit pour permettre une meilleure compréhension de l'invention. Le système informatique qui assure la mise en oeuvre du procédé selon l'invention, comporte un ordinateur ou une unité centrale **1** dialoguant, d'une part, avec des terminaux, tels qu'un clavier **2** et un écran **3** et, d'autre part, avec un lecteur-enregistreur **4** adapté pour écrire sur et lire un support magnétique **5** comportant $\underline{n}$ pistes d'enregistrement $P_o$ à $P_n$. De préférence, le support **5** se présente sous la forme d'une carte portable à pistes magnétiques.

L'ordinateur **1** comporte un circuit interface **6** assurant la liaison entre le lecteur **4** et l'ordinateur **1**, par l'intermédiaire d'un bus d'échange **7**. Le lecteur **4** est composé, dans l'exemple illustré, d'un système **8** de lecture-écriture et d'un contrôleur **9** pilotant le système **8**.

Le contrôleur **9** comporte un circuit d'interface **11** relié au bus d'échange **7** et assurant la gestion des données circulant entre le contrôleur **9** et l'ordinateur **1**. Le circuit d'interface **11** est connecté à un bus interne **12** reliant entre eux un microprocesseur **13**, une mémoire morte programmable **14**, une mémoire vive interne **15**, un circuit **16** de contrôle des données, un étage **17** d'entrées-sorties et un bloc **18** de contrôle d'état. Le circuit **16**, l'étage **17** et le bloc **18** dialoguent avec un circuit **19** assurant l'interface entre le système **8** de lecture-écriture et le contrôleur **9**.

Le système **8** comporte un processeur maître **21** relié au circuit interface **19** par une liaison d'échange **22**. Le processeur maître **21** assure, par l'intermédiaire de circuits de gestion **23**, **24**, le pilotage, d'une part, d'une tête magnétique **25** de lecture-écriture apte à être déplacée transversalement au-dessus des pistes et, d'autre part, d'un dispositif électromécanique **26** destiné à entraîner la carte **5** en déplacement linéaire alternatif suivant la direction formée par les pistes.

Le système informatique décrit ci-dessus assure la mise en oeuvre du procédé selon l'invention, destiné à permettre l'organisation de la lecture, des informations portées par la carte, selon un ordre choisi, de manière à anticiper la demande de lecture par l'ordinateur.

Pour assumer une telle fonction, la carte **5** est aménagée pour comporter au moins une piste $P_o$ réservée et identifiée, afin de constituer une piste de première lecture obligatoire. Après l'enregistrement des informations sur des pistes de la carte, des pistes prioritaires sont choisies parmi les pistes contenant les informations. Ces pistes prioritaires sont destinées à contenir des informations devant être lues en priorité, en raison, par exemple, de leur caractère d'importance. L'identification de l'ordre de priorité ou de séquence de lecture des pistes prioritaires est alors enregistrée sur la piste de première lecture $P_o$ pour constituer ainsi une piste de stratégie de lecture de la carte.

A titre d'exemple, la **fig.** 1 illustre une carte **5** pour laquelle la piste $P_o$ de stratégie indique l'identification par un codage connu, de cinq pistes prioritaires devant être lues selon un ordre de priorité, à savoir : $P_1$, $P_2$, $P_4$, $P_5$, $P_8$.

De préférence, la piste de stratégie $P_o$ est copiée sur une seconde piste, par exemple $P_{149}$, pour constituer une piste de sauvegarde de la piste $P_o$. De préférence, la piste de sauvegarde est placée sur la carte à distance de la première piste $P_o$.

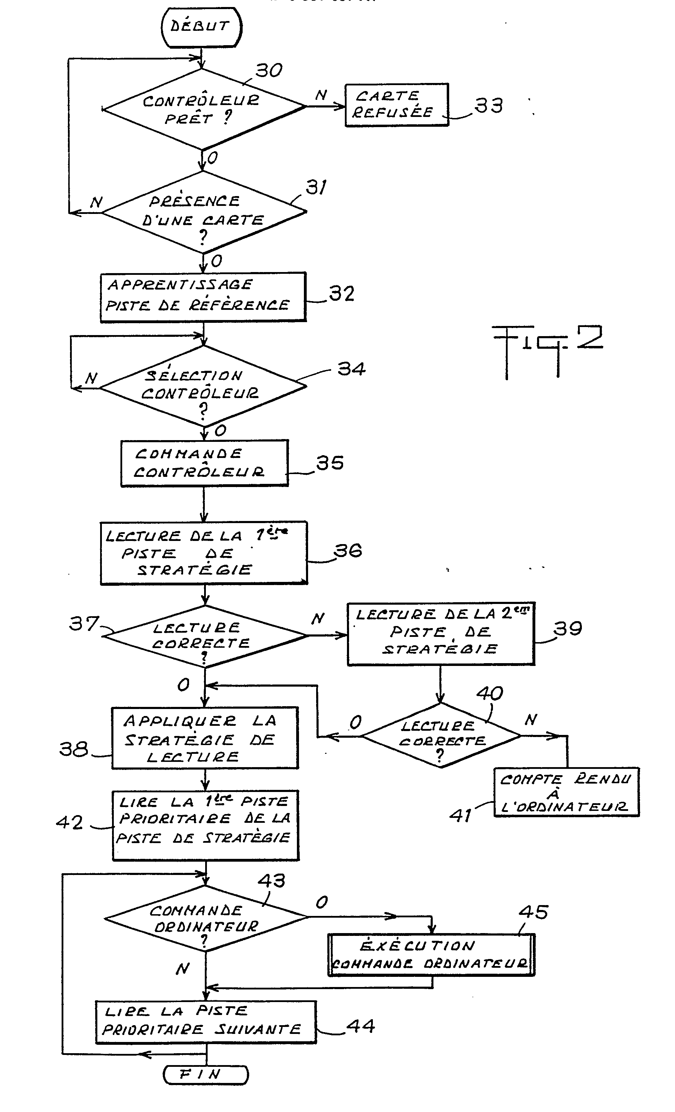

La **fig.** 2 décrit, sous la forme d'un organigramme, le procédé de lecture d'une telle carte **5**.

Si le contrôleur **9** est prêt à lire une carte **5** introduite dans le lecteur par un utilisateur (étape **30**) et détecte la présence de la carte (étape **31**), le lecteur lit une piste de référence physique portée par la carte (étape **32**). Dans le cas où le contrôleur **9** n'est pas apte à lire une carte, cette dernière est refusée (étape **33**). Suite à l'apprentissage de la piste de référence, le contrôleur **9**, après sa sélection (étape **34**), assure le pilotage et la commande du système **8** de lecture-écriture (étape **35**).

Le contrôleur **9** procède alors automatiquement à la lecture complète de la piste $P_o$ de stratégie de lecture (étape **36**). Il doit être considéré que la lecture d'une piste consiste à lire, par la tête magnétique, les informations contenues sur la piste et à transférer les informations, contenues sur cette piste, dans la mémoire interne **15** du contrôleur.

Après vérification de la lecture correcte de la piste $P_o$ (étape **37**), la stratégie de lecture choisie est appliquée (étape **38**). Si la lecture de la piste de stratégie $P_o$ n'est pas correcte, le contrôleur **9** assure la lecture de la seconde piste $P_{149}$ de stratégie (étape **39**). Après la vérification du succès de la lecture de la seconde piste (étape **40**), la stratégie de lecture est appliquée. Dans le cas où la lecture de la seconde piste n'a pas été correcte, le contrôleur **9** envoie un message d'information à l'ordinateur **1** qui peut avertir l'utilisateur de la lecture impossible de la carte introduite (étape **41**).

Lorsque le transfert des données de la piste de stratégie, vers la mémoire interne **15** du contrôleur, a été correctement exécuté, le contrôleur procède à la lecture de la première piste prioritaire choisie, à savoir la piste $P_1$ dans l'exemple illustré (étape

42). Le contrôleur **9** examine alors si l'ordinateur **1** n'a pas émis un ordre de commande particulier (étape **43**). Si aucun ordre de commande n'a été émis, le contrôleur **9** assure, selon l'ordre de priorité choisi, la lecture de la piste prioritaire suivante enregistrée sur la piste de stratégie (étape **44**) et procéde ainsi de suite jusqu'à la dernière piste prioritaire choisie. Dans l'exemple illustré, le contrôleur **9** assure donc la lecture successive des pistes dans l'ordre suivant : $P_1$, $P_2$, $P_4$, $P_5$, $P_8$.

Dans le cas où l'ordinateur **1** a émis un ordre de commande particulier, le contrôleur **9** interrompt la stratégie de lecture après la fin de la lecture d'une piste prioritaire et procède à l'exécution de l'ordre de commande (étape **45**). Lorsque l'ordre de commande a été exécuté, le contrôleur poursuit la lecture des pistes prioritaires selon l'ordre de priorité choisi, jusqu'à ce qu'un nouvel ordre de commande intervienne ou que la dernière piste prioritaire soit lue.

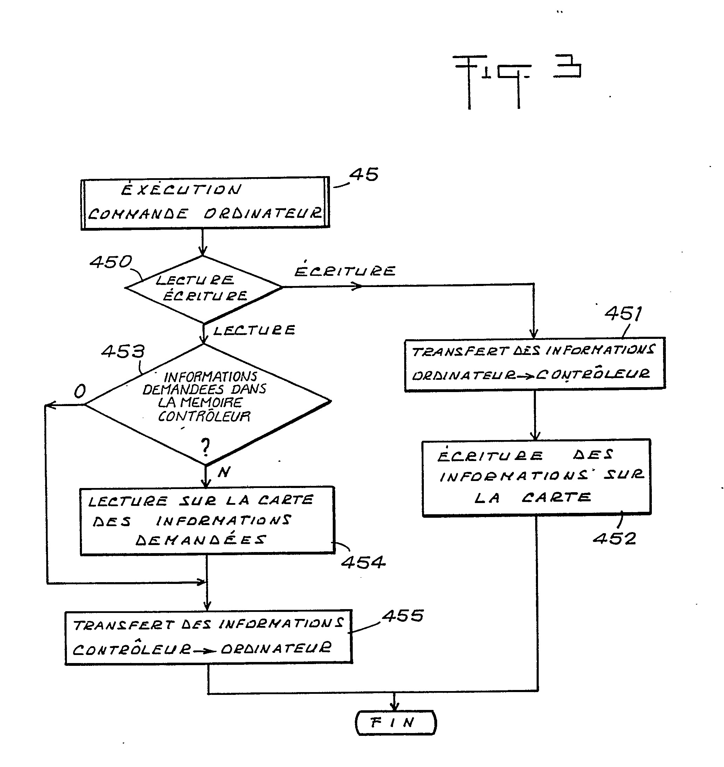

La **fig. 3** décrit, plus précisément, l'étape **45** d'exécution d'un ordre de commande issu de l'ordinateur **1**. Chaque ordre de commande est examiné pour déterminer s'il s'agit d'un ordre d'écriture ou de lecture (etape **450**).

Dans le cas d'un ordre d'écriture, les informations devant être enregistrées sur la carte **5** sont d'abord transférées de la mémoire de l'ordinateur **1** dans la mémoire interne **15** du contrôleur (étape **451**) puis, ensuite, enregistrées sur la carte **5** (étape **452**) à partir de cette mémoire interne.

Dans le cas d'un ordre de lecture, cet ordre est examiné (étape **453**) pour rechercher si les informations demandées par l'ordinateur ne sont pas contenues dans la mémoire interne **15** du contrôleur, à la suite d'une lecture préalable de ces informations, notamment lors de l'exécution de la stratégie de lecture. Si les informations demandées ne sont pas contenues dans la mémoire interne **15**, le contrôleur **9** procède à la lecture des informations demandées sur la carte (étape **454**). Lorsque les informations demandées par l'ordinateur sont contenues dans la mémoire interne **15**, ces informations sont transférées dans la mémoire de l'ordinateur **1** (étape **455**).

Le procédé selon l'invention assure ainsi la lecture automatique de pistes prioritaires selon un ordre de priorité choisi permettant d'anticiper les lectures susceptibles d'intervenir ultérieurement. En effet, cette méthode de lecture offre l'avantage de transférer automatiquement dans une mémoire vive, à savoir la mémoire interne **15** du contrôleur, les informations contenues sur la carte, qui présentent une forte probabilité à être consultées ultérieurement par l'utilisateur. De ce fait, le temps d'accès aux informations ne correspond plus à la durée relativement élevée nécessaire à la lecture des informations par la tête magnétique, mais à celle nécessaire pour lire les informations dans la mémoire. De ce fait, le temps d'accès aux informations est réduit.

Il est évident pour l'homme de l'art qu'à la place d'une piste ayant un secteur unique on peut utiliser une piste présentant plusieurs secteurs et que le terme "piste" utilisé dans la présente demande ainsi que dans les revendications peut avoir la signification de secteur.

Il est bien évident, aussi, que le procédé suivant l'invention a été décrit avec une carte magnétique mais que le procédé peut être utilisé avec une disquette dont un secteur comprendrait la stratégie de lecture ou même avec des cartes dont le matériau est enregistrable avec des moyens optiques et qui sont bien connues dans la technique.

Par ailleurs, il est à noter que le procédé selon l'invention laisse la priorité aux ordres de commande émis par l'ordinateur, en relation avec le choix de l'utilisateur.

L'invention n'est pas limitée aux exemples décrits et représentés, car diverses modifications peuvent y être apportées sans sortir de son cadre.

**Revendications**

1 - Procédé d'organisation prioritaire d'informations enregistrées sur un support, notamment une carte magnétique, comportant **n** pistes ou secteurs dont au moins une est réservée et identifiée pour constituer une piste de première lecture obligatoire, caractérisé en ce qu'il consiste :
- à choisir au moins une piste prioritaire parmi les pistes d'enregistrement des informations,
- et à enregistrer, sur la piste de première lecture, l'identification de la ou des pistes prioritaires pour constituer une piste **($P_o$)** de stratégie de lecture de la carte selon un ordre de priorité déterminé.

2 - Carte portable à **n** pistes, caractérisée en ce qu'elle comporte au moins une piste **($P_o$)** de stratégie de lecture, constituée selon le procédé de la revendication 1.

3 - Carte portable selon la revendication 2, caractérisée en ce qu'elle comporte une seconde piste de stratégie de lecture identique en enregistrement à la première, pour constituer une copie de sauvegarde et placée sur le support à distance de la première.

4 - Procédé de lecture d'une carte portable selon la revendication 2 ou 3, par un lecteur-enregistreur **(4)** connecté à un ordinateur **(1)**, caractérisé en ce qu'il consiste :
- après l'introduction de la carte **(5)** dans le lecteur **(4)**, à lire automatiquement et complètement une piste de stratégie de lecture,
- à transférer dans une mémoire interne le contenu de la piste de stratégie lue,

- à procéder à la lecture complète d'une piste prioritaire selon l'ordre de priorité défini dans la piste stratégie,
- à transférer dans une mémoire interne le contenu de la piste prioritaire lue,
- et à poursuivre, successivement, la lecture et le transfert de chacune des pistes prioritaires selon l'ordre de priorité, tant que l'ordinateur n'émet pas un ordre de commande.

5 - Procédé selon la revendication 4, caractérisé en ce qu'il consiste, après l'exécution d'un ordre de commande, à continuer la lecture et le transfert du contenu des pistes prioritaires selon l'ordre de priorité défini dans la piste de stratégie.

6 - Procédé selon la revendication 4 ou 5, caractérisé en ce qu'il consiste, après la lecture et le transfert du contenu de chaque piste prioritaire, à examiner si l'ordinateur a émis un ordre de commande.

7 - Procédé selon la revendication 4, 5 ou 6, caractérisé en ce qu'il consiste, pour chaque ordre de commande émis par l'ordinateur, à examiner s'il s'agit d'un ordre de commande de lecture ou d'écriture.

8 - Procédé selon l'une des revendications 4 à 6, caractérisé en ce que le contenu de chaque piste est contenu dans une mémoire d'un contrôleur du lecteur-enregistreur.

9 - Procédé selon les revendications 7 et 8, caractérisé en ce qu'il consiste, pour chaque ordre de commande de lecture :
- à rechercher si les informations demandées par l'ordinateur sont contenues dans la mémoire du contrôleur,
- à lire sur la carte les informations demandées et à transférer les informations lues dans la mémoire du contrôleur, lorsque ces dernières ne sont pas contenues dans la mémoire du contrôleur,
- et à transférer dans l'ordinateur les informations demandées et contenues dans la mémoire du contrôleur.

Fig. 1

EP 0 351 637 A1

DÉBUT

CONTRÔLEUR PRÊT ? — 30 — N → CARTE REFUSÉE — 33

O

PRÉSENCE D'UNE CARTE ? — 31 — N

O

APPRENTISSAGE PISTE DE RÉFÉRENCE — 32

SÉLECTION CONTRÔLEUR ? — 34 — N

O

COMMANDE CONTRÔLEUR — 35

LECTURE DE LA 1ère PISTE DE STRATÉGIE — 36

37 — LECTURE CORRECTE ? — N → LECTURE DE LA 2ème PISTE DE STRATÉGIE — 39

O

APPLIQUER LA STRATÉGIE DE LECTURE — 38

40 — LECTURE CORRECTE ? — N

O

COMPTE RENDU À L'ORDINATEUR — 41

LIRE LA 1ère PISTE PRIORITAIRE DE LA PISTE DE STRATÉGIE — 42

43 — COMMANDE ORDINATEUR ? — O → EXÉCUTION COMMANDE ORDINATEUR — 45

N

LIRE LA PISTE PRIORITAIRE SUIVANTE — 44

FIN

Fig.2

EP 0 351 637 A1

Fig. 3

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | EP-A-0 260 115 (CANON) <br> * Colonne 2, lignes 48-56; colonne 3, lignes 35-49; figure 1 * <br> --- | 1,2,4 | G 06 F 15/40 <br> G 11 B 27/32 <br> G 06 F 3/08 |
| A | PATENT ABSTRACTS OF JAPAN, vol. 11, no. 399 (P-651)[2846], 26 décembre 1987, page 99 P 651; & JP-A-62 162 239 (CANON INC.) 18-07-1987 <br> * En entier * <br> --- | 1,2,4 | |
| A | PATENT ABSTRACTS OF JAPAN, vol. 8, no. 242 (P-311)[1679], 7 novembre 1984, page 145 P 311; & JP-A-59 116 838 (SHARP K.K.) 05-07-1984 <br> * En entier * <br> ----- | 1,2,4 | |

DOMAINES TECHNIQUES
RECHERCHES (Int. Cl.5)

G 06 F 3/08
G 06 F 15/40
G 11 B 27/32
G 11 B 27/10
G 11 B 27/28
G 06 K 7/08
G 06 F 12/08

Le présent rapport a été établi pour toutes les revendications

| Lieu de la recherche | Date d'achèvement de la recherche | Examinateur |
|---|---|---|
| LA HAYE | 03-10-1989 | MOENS R.A.A. |